(19) **Europäisches Patentamt**
**European Patent Office**
**Office européen des brevets**

(11) **EP 2 613 698 B1**

(12) **EUROPEAN PATENT SPECIFICATION**

(45) Date of publication and mention
of the grant of the patent:
**17.06.2020   Bulletin 2020/25**

(51) Int Cl.:
***G06F 3/0487*** *(2013.01)*

(21) Application number: **11823929.2**

(22) Date of filing: **10.08.2011**

(86) International application number:
**PCT/US2011/047306**

(87) International publication number:
**WO 2012/033598 (15.03.2012 Gazette 2012/11)**

(54) **HUMAN INTERFACE DEVICE INPUT FILTER BASED ON MOTION**

BEWEGUNGSBASIERTER EINGABEFILTER FÜR EINE MENSCH-MASCHINE-SCHNITTSTELLE

FILTRE D'ENTRÉE DE DISPOSITIF D'INTERFACE HUMAINE BASÉ SUR LE MOUVEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2010   US 879970**

(43) Date of publication of application:
**17.07.2013   Bulletin 2013/29**

(73) Proprietor: **Carefusion 303 Inc.**
**San Diego, California 92130 (US)**

(72) Inventors:
 • **VIK, Daniel**
   **La Jolla, California 92037 (US)**
 • **BORGES, Gregory**
   **San Diego, California 92129 (US)**
 • **CHANDRASENAN, Sreelal**
   **San Diego, California 92128 (US)**
 • **HALBERT, Donald**
   **San Diego, California 92106 (US)**
 • **GAETANO, Jeffrey L.**
   **San Diego, California 92122 (US)**

(74) Representative: **Richards, John et al**
**Ladas & Parry LLP**
**Temple Chambers**
**3-7 Temple Avenue**
**London EC4Y 0DA (GB)**

(56) References cited:
**WO-A2-2008/067314      FI-A- 20 095 570
JP-B- 3 872 190          US-A1- 2004 263 479
US-A1- 2006 189 899      US-A1- 2006 189 901
US-A1- 2006 224 089      US-A1- 2008 006 762
US-A1- 2008 248 871      US-A1- 2009 315 719**

**Description**

FIELD

The present technology relates generally to the medical device field.

BACKGROUND

There is a need to safely transport medical devices. A damaged medical device is not only costly for the caregiver to maintain, repair and/or replace, but it can be dangerous for the patient if damages remain undetected. The possibility of damage caused to these medical devices during transport always exists. Further, the possibility that a medical device will inadvertently be activated and/or inactivated during transport is also great. Moreover, instructions mistakenly given to a medical device during transport could negatively affect a patient's care, thus also creating a danger for the patient.

DESCRIPTION OF EMBODIMENTS

Figure 1 is a block diagram of a device for filtering human interface device inputs based on motion, according to one embodiment of the present technology.

Figure 2 is a flow diagram of a method for filtering human interface device inputs based on motion, according to one embodiment of the present technology.

Figure 3 is a diagram of an example computer system used for filtering human interface device inputs based on motion, according to one embodiment of the present technology.

The drawings referred to in this description should not be understood as being drawn to scale unless specifically noted.

DESCRIPTION OF EMBODIMENTS

Reference will now be made in detail to embodiments of the present technology, examples of which are illustrated in the accompanying drawings. While the technology will be described in conjunction with various embodiment(s), it will be understood that they are not intended to limit the present technology to these embodiments. On the contrary, the present technology is intended to cover alternatives, modifications and equivalents, which may be included within the spirit and scope of the various embodiments as defined by the appended claims.

Furthermore, in the following detailed description, numerous specific details are set forth in order to provide a thorough understanding of the present technology. However, the present technology may be practiced without these specific details. In other instances, well known methods, procedures, components, and circuits have not been described in detail as not to unnecessarily obscure aspects of the present embodiments.

Unless specifically stated otherwise as apparent from the following discussions, it is appreciated that throughout the present detailed description, discussions utilizing terms such as "determining", "generating", "applying", "measuring", "detecting", "sending", or the like, refer to the actions and processes of a computer system, or similar electronic computing device. The computer system or similar electronic computing device manipulates and transforms data represented as physical (electronic) quantities within the computer system's registers and memories into other data similarly represented as physical quantities within the computer system memories or registers or other such information storage, transmission, or display devices. The present technology is also well suited to the use of other computer systems such as, for example, optical and mechanical computers.

The discussion will begin with a brief overview of the general process for transporting patient care devices and the limitations associated therewith. The discussion will then focus on embodiments of the present technology that provide a device for filtering human interface device inputs based on motion, thereby providing a method to overcome the problems caused during patient care device transport.

Overview

In general, when medical devices are transported, they endure many hazardous motions caused by shaking, bumping, and other means of changing the position of the medical device. Due to these different positional changes, there is a substantial possibility that the medical device will experience some type of damage or some inadvertent input instruction.

Embodiments of the present technology provide a device for reducing and/or preventing the problems caused by the negative side effects of transporting a patient care device. Embodiments of the present technology monitor the acceleration forces associated with a moving patient care device. From these measured acceleration readings, it may be determined, for example, if the patient care device's movement is due to being bumped as opposed to being dropped. If it determined that the patient care device was dropped, in one embodiment, the device alerts the caregiver as to the possibility of a damaged patient care device.

Further, embodiments of the present technology enable a determination of intentional as opposed to unintentional input instructions to the patient care device during transport. For example, embodiments may determine if keyboard, touch screen and knob device input is intentional or unintentional. In this manner, once instructions are determined to be unintentional, embodiments of the present technology prevent the patient care device 108 from acting on these unintentional instructions. Thus, embodiments avoid and/or limit acting on unintended inputs occurring during transportation or part of the regular operation of the patient care device. Moreover, embodiments inform the caregiver and/or biomed about potential safety issues due to bumps, falls, or the accidental or intentional breaking of a tamper mechanism. In one embodiment, this determination is sent to a system separate from the present device, such that the results may be reviewed by medical professionals.

Therefore, embodiments of the present technology provide a method by which the caregiver is alerted as to the possible damage to a patient care device. This provides a health benefit in terms of safety to patients. For example, if the patient care device is damaged, it may not function well in treating the patient. Furthermore, embodiments of the present technology provide a method for filtering intentional vs. unintentional human interface input to patient care devices during their transport. This feature also provides a health benefit in terms of safety to patients. For example, if it is determined that keyboard input to a patient care device increasing the dosage to a patient is unintentional, the caregiver will be alerted to this motion event and appropriate steps may then be taken.

The following discussion will begin with a description of the structure of the components of the present technology. This discussion will then be followed by a description of the components in operation.

Structure

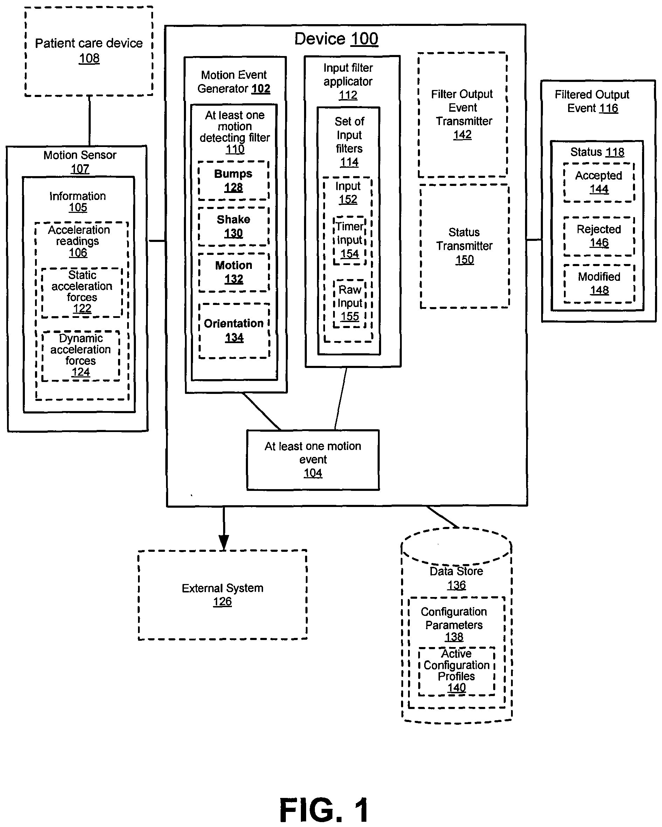

Figure 1 is a block diagram of a device 100 for filtering human interface device (HID) inputs based on motion, in accordance with the present technology. In one embodiment, the device 100 includes a motion event generator 102 and an input filter applicator 112.

The motion event generator 102 is configured for generating at least one motion event 104 based on information 105 associated with a movement of a patient care device 108 and at least one motion detecting filter 110. In one embodiment, the at least one motion event 104 includes, but is not limited to, occurrences of shake, bump, relocation and/or fall.

In one embodiment, the at least one motion detecting filter 110 detects orientation 134 using a filter that is appreciated to be already well known in the art to detect orientation by analyzing static acceleration forces. The filter includes a low pass filter to smooth the input values to reduce noise on the input signal. The output of the filter is an orientation vector expressed in, for example, Cartesian coordinates.

In one embodiment, the at least one motion detecting filter 110 detects bumps 128 and taps using a high g-force filter, including a high pass filter to detect sharp acceleration changes.

In another embodiment, the at least one motion detecting filter 110 detects shake 130 using a band pass filter on the derivate of the acceleration. The differences in acceleration are analyzed for persistency over a period of time.

In yet another embodiment, the at least one motion detecting filter 110 detects motion 132. For example, falling may be detected. Falls are detected when the sum of the acceleration will tend towards 0g. A low pass filter may be used to smooth the inputs and a threshold is used to determine when the fall starts and ends.

Further, in one embodiment, the at least one motion detecting filter 110 detects positional changes by using a filter that integrates the acceleration to get velocity and further integrates the velocity to get position.

It should be noted that embodiments of the present technology provide for a plug-in interface at the motion event generator 102 to allow the motion event generator 102 to be extended with additional filters that follow the same general rules on inputs and outputs, but have different internal behavior and configurations.

In one embodiment, information 105 originates from a motion sensor 107. In one embodiment, the motion sensor 107 is coupled with the device 100. The motion sensor 107 is configured for measuring information 105 associated with the movement of the patient care device 108.

In one embodiment, the motion sensor 107 is an accelerometer. While in another embodiment, the motion sensor 107 is a global positioning system (and the equivalent) which is used to detect and read acceleration forces.

Further, in another embodiment, a motion sensor 107 is a gyroscope used to aid in the determination of orientation of the patient care device 108.

In one embodiment, the information 105 is acceleration readings 106. In one embodiment, these acceleration readings 106 originate from the accelerometer. The accelerometer is configured for measuring acceleration forces associated with the movement of the patient care device 108. In one embodiment, the accelerometer is a digital accelerometer using pulse width modulation for its output. In another embodiment, the accelerometer is an accelerometer that outputs analog signals and replaces the digital accelerometer. For example, a continuous voltage that is proportional to acceleration that can be 2.5V for 0.0G, 2.6V for 0.5G and 2.7V for 1.0G. In one embodiment, the acceleration readings 106 include at least one of static acceleration forces 122 and dynamic acceleration forces 124.

In the invention the at least one motion event 104 is routed to at least one of a system external 126 to the device 100 and the input filter applicator 112.

It is significant to note that in accordance with embodiments of the present technology, there may be a situation during which a patient care device 108 is not moving, but is being tampered with nonetheless. Additionally, while stationary, the patient care device 108 may receive unintentional bumps, incur falls, etc., that may cause unwanted input. The input filter application 112 plays a significant role in determining the status of this input.

In the invention the input filter applicator 112 is configured for applying a set of input filters 114 to the at least one motion event 104, thereby generating a filtered output event 116 that indicates a status 118 of the movement of the patient care device 108. The set of input filters 114 are used to support the determining of whether or not an HID input 152 should be rejected 146, modified 148, or passed through (as accepted 144) to an output port (for access from an external system 126). In one embodiment, the HID input 152 is "raw" input 155. In one embodiment, the input 152 of the set of input filters 114 may be a timer input 154. The timer input 154 includes a variety of timing considerations, such as and not limited to, time of movement, time span of movement, a history of movement (times), etc.

Thus, in one embodiment, the set of input filters 114 in the device 100 generates at a filtered output event 116 (HID events [key presses, etc.]) based on raw input 155 and at least one motion event 104. For example, if a bump 128 is detected at the same time that a key is pressed (raw input 155), the key press may be discarded, or "rejected" 146, if it is determined that the pressed key was merely a side effect of being bumped. Therefore, a more accurate filtered output event 116 is generated.

The individual input filters follow the same generic model, where $M_I$ is the vector of recent events from the motion filter *i,* and C is the configuration parameters, to generate filtered output events $E_{out}$, including a *Null* event that may not be routed to the output port, from unfiltered input events $E_{in}$ using a specific filter function f():

$$E_{out}(t) = f(E_{in}(t), \overline{C}, \overline{M}_1, \ldots, \overline{M}_n, t) \qquad \text{Equation (1)}$$

In one embodiment, the input filter applicator 112 utilizes Equation 1 in a filter to determine whether keyboard events should be rejected or routed to the output port (for access by the external system 126 or another source). In one embodiment, the filter rejects key presses that occur within a configurable time of shakes and falls. The filter may also utilize shaking events and reject key presses that may be associated with device shaking as opposed to an intended press by a human user.

Furthermore, in one embodiment, the input filter applicator 112 utilizes Equation 1 in a filter to determine whether touch screen events should be rejected or routed to the output port. The filter rejects key presses that occur within a configurable time of shakes and falls. Inputs from the touch screen device may be correlated with bump events to determine if a touch screen event is intentional or not.

In one embodiment, the input filter applicator 112 utilizes Equation 1 in a filter to determine whether known device events should be rejected or routed to the output port. The filter rejects key presses that occur within a configurable time of shakes and falls.

In one embodiment, the input filter applicator 112 utilizes Equation 1 in a filter to determine whether slider device events should be rejected or routed to the output port. The filter rejects key presses that occur within a configurable time of shakes and falls.

In the invention, the present technology further includes a filter output event transmitter 142. The filter output event transmitter 142 is configured for sending the filtered output event 116 to an external system 126. In one embodiment, the filtered output event 116 is configured to be used to determine preventative maintenance needs. For example, the device 100 tracks a history of the patient care device 108, which may include, but is not limited to, bumps, falls and shakes. Based on this tracking, it may be determined that the patient care device 108 is in need for the next updated maintenance service. In another embodiment, the filtered output event 116 is configured to be used to alert medical personnel when the patient care device 108 is dropped. In both cases, the device 100 sends this filtered output event 116 to an external system 126 in the form that is readable and usable by a caregiver. Further, in embodiments of the present technology, it is also possible for the generated filtered output event 116 to be accessed by an external system 126.

It should be appreciated that the data port associated with the filtered output event 116 generated by the input filter applicator 112 represents any type of external communication including, but not limited to, UART, USB, SPI, I2C, memory mapped I/O, external database, messaging or other means of physical or logical communication.

In one embodiment, the status 118 comprises at least one of "accepted" 144, "rejected" 146 and "modified" 148. More specifically and as already stated herein, the input filter applicator 112 includes a set of input filters 114 in which the input 152 comprises the at least one motion event 104 and the timer input 154, that are used to support determining whether an input event (such as a keyboard press, etc.) from an HID device should be rejected 146, modified 148, or passed through (accepted 144) to the output port.

In the invention, the present technology further comprises a status transmitter 150 configured for sending the status 118 of a component of the patient care device 108 to a system external 126 to the device 100. In embodiments of the present technology, the component may be a keyboard pressing, a touch screen pressing, a knob manipulating and/or slider sliding. The filtered output event 116 may be sent or connect with external systems, configuration systems, logging systems, service systems, nurse call systems, and clinical applications.

In one embodiment, the device 100 further comprises a data store 136 configured for storing configuration parameters 138 for the at least one of the at least one motion detecting filter 110 and the set of input filters 114. In one embodiment, the data store 136 provides storage of the configuration parameters 138 that is utilizing ROM memory. In other embodiments, the data store 136 can be a database, RAM, flash memory, or other means of defining the set that does not relate any of the common types explicitly detailed.

In one embodiment, the configuration parameters 138 are modifiable at a system external 126 to the device 100. Configuration parameters 138 may be modified, thus enabling the modification of the sensitivity to which a device 100 reacts to "intentional" versus "unintentional" inputs. For example, before modification, the device 100 may determine that a "bump" was sufficient to send an alert to a caregiver regarding possible damage. However, after modification, the "bump" is not a sufficient trigger to send an alert to the caregiver.

In another embodiment, the configuration parameters 138 are grouped into active configuration profiles 140 that define behavior of operations of the device 100. For example, in one embodiment, operations refer to the operations of the motion sensor 107, such as the accelerometer. Behavior, in one embodiment, refers to the system behavior, such as the behavior of device 100 comprising a system of components. In yet another embodiment, the active configuration profiles 140 are modifiable at the system external 126 to the device 100.

One embodiment of the present technology provides a system for filtering human interface device inputs based on motion. The system includes a patient care device 108 coupled with the motion filtering human interface device 100 of Figure 1.

Thus, as described herein, embodiments of the present technology enable "rejecting" unintended input, allowing different sensitivity depending on if the device moves, updating maintenance schedules, detecting potential damages, alerting nurses on the dropping of the equipment, incident investigations, logging motion to reproduce events, and sensitivity adjustments.

Thus, the present technology provides a wide array of benefits to the caregiver and to the patient. For example, but limited to, embodiments enable the detection and rejection of unintended inputs both while stationary and in motion. Further, embodiments enables different responses based on if the patient care device 108 moves or remains stationary. Thus, the device 100 may be more sensitive to movement than nonmovement and vice versa. Embodiments also provide for adjustments and reconfigurations to such sensitivity. Moreover, embodiments are able to generate filtered output events 116 from motion data and raw input 155.

Additionally, embodiments provide for updating a maintenance schedule based on motions detected, at least one motion event 104, input 152 and filtered output events 116. Furthermore, embodiments enable potential damage of the patient care device 108 to be detected and a caregiver (e.g., nurse) to be alerted to such events, such as a patient care device 108 being dropped. Moreover, embodiments assist in the investigation of incidents, such as, but not limited to, potential damage, damage, tampering, intentional and unintentional contact. Embodiments also enable the recording of at least one motion event 104 in order to reproduce it. Additionally, embodiments enable the detection of unintentional movement of a patient.

Operation

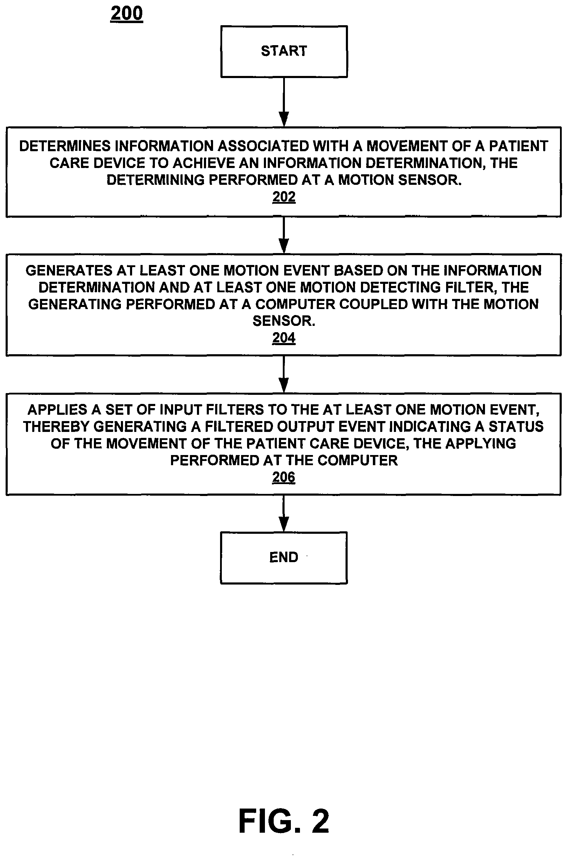

Figure 2 is a flow diagram of a method 200 for filtering human interface device inputs based on motion. In one embodiment, at 202, and as described herein, information 105 associated with a movement of a patient care device 108 are determined to achieve an information determination. The determining is performed at a motion sensor 107.

In one embodiment, at 204, and as described herein, at least one motion event 104 is generated based on the information determination and the at least one motion detecting filter 110. The generating 204 is performed at a computer 300 coupled with the motion sensor 107.

At 206, in one embodiment and as described herein, a set of input filters 114 are applied to the at least one motion event 104, thereby generating a filtered output event 116 indicating a status 118 of the movement of the patient care device 108. The applying 206 is performed at the computer 300.

All statements herein reciting principles, aspects, and embodiments of the invention as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. The scope of the present invention, therefore, is not intended to be limited to the exemplary embodiments shown and described herein. Rather, the scope and spirit of present invention is embodied by the appended claims.

Example Computer System Environment

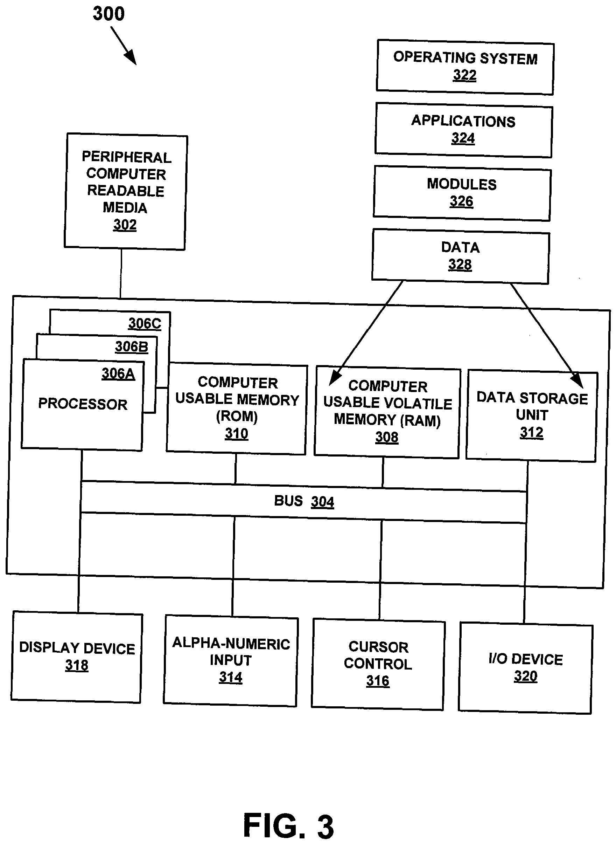

With reference now to Figure 3, portions of the technology for filtering human interface device inputs based on motion are composed of computer-readable and computer-executable instructions that reside, for example, in computer-usable media of a computer system. That is, Figure 3 illustrates one example of a type of computer that can be used to implement embodiments, which are discussed below, of the present technology.

Figure 3 illustrates an example computer system 300 used in accordance with embodiments of the present technology. It is appreciated that system 300 of Figure 3 is an example only and that the present technology can operate on or within a number of different computer systems including general purpose networked computer systems, embedded computer systems, routers, switches, server devices, user devices, various intermediate devices/artifacts, stand alone computer systems, and the like. As shown in Figure 3, computer system 300 of Figure 3 is well adapted to having peripheral computer readable media 302 such as, for example, a floppy disk, a compact disc, and the like coupled thereto.

System 300 of Figure 3 includes an address/data bus 304 for communicating information, and a processor 306A coupled to bus 304 for processing information and instructions. As depicted in Figure 3, system 300 is also well suited to a multi-processor environment in which a plurality of processors 306A, 306B, and 306C are present. Conversely, system 300 is also well suited to having a single processor such as, for example, processor 306A. Processors 306A, 306B, and 306C may be any of various types of microprocessors. System 300 also includes data storage features such as a computer usable volatile memory 308, e.g. random access memory (RAM), coupled to bus 304 for storing information and instructions for processors 306A, 306B, and 306C.

System 300 also includes computer usable non-volatile memory 310, e.g. read only memory (ROM), coupled to bus 304 for storing static information and instructions for processors 306A, 306B, and 306C. Also present in system 300 is a data storage unit 312 (e.g., a magnetic or optical disk and disk drive) coupled to bus 304 for storing information and instructions. System 300 also includes an optional alphanumeric input device 314 including alphanumeric and function keys coupled to bus 304 for communicating information and command selections to processor 306A or processors 306A, 306B, and 306C. System 300 also includes an optional cursor control device 316 coupled to bus 304 for communicating user input information and command selections to processor 306A or processors 306A, 306B, and 306C. System 300 of the present embodiment also includes an optional display device 318 coupled to bus 304 for displaying information.

Referring still to Figure 3, optional display device 318 of Figure 3 may be a liquid crystal device, cathode ray tube, plasma display device or other display device suitable for creating graphic images and alphanumeric characters recognizable to a user. Optional cursor control device 316 allows the computer user to dynamically signal the movement of a visible symbol (cursor) on a display screen of display device 318. Many implementations of cursor control device 316 are known in the art including a trackball, mouse, touch pad, joystick or special keys on alpha-numeric input device 314 capable of signaling movement of a given direction or manner of displacement. Alternatively, it will be appreciated that a cursor can be directed and/or activated via input from alpha-numeric input device 314 using special keys and key sequence commands.

System 300 is also well suited to having a cursor directed by other means such as, for example, voice commands. System 300 also includes an I/O device 320 for coupling system 300 with external entities. For example, in one embodiment, I/O device 320 is a modem for enabling wired or wireless communications between system 300 and an external network such as, but not limited to, the Internet. A more detailed discussion of the present technology is found below.

Referring still to Figure 3, various other components are depicted for system 300. Specifically, when present, an operating system 322, applications 324, modules 326, and data 328 are shown as typically residing in one or some combination of computer usable volatile memory 308, e.g. random access memory (RAM), and data storage unit 312. However, it is appreciated that in some embodiments, operating system 322 may be stored in other locations such as on a network or on a flash drive; and that further, operating system 322 may be accessed from a remote location via, for example, a coupling to the internet. In one embodiment, the present technology, for example, is stored as an application 324 or module 326 in memory locations within RAM 308 and memory areas within data storage unit 312. The present technology may be applied to one or more elements of described system 300. For example, a method for identifying a device associated with a transfer of content may be applied to operating system 322, applications 324, modules 326, and/or data 328.

The computing system 300 is only one example of a suitable computing environment and is not intended to suggest any limitation as to the scope of use or functionality of the present technology. Neither should the computing environment 300 be interpreted as having any dependency or requirement relating to any one or combination of components illustrated in the example computing system 300.

The present technology may be described in the general context of computer-executable instructions, such as program modules, being executed by a computer. Generally, program modules include routines, programs, objects, components, data structures, etc., that perform particular tasks or implement particular abstract data types. The present technology may also be practiced in distributed computing environments where tasks are performed by remote processing devices that are linked through a communications network. In a distributed computing environment, program modules may be located in both local and remote computer-storage media including memory-storage devices.

The present technology may be described in the general context of computer-executable instructions, such as program modules, being executed by a computer. Generally, program modules include routines, programs, objects, components, data structures, etc., that perform particular tasks or implement particular abstract data types. The present technology may also be practiced in distributed computing environments where tasks are performed by remote processing devices that are linked through a communications network. In a distributed computing environment, program modules may be located in both local and remote computer-storage media including memory-storage devices.

All elements, parts and steps described herein are preferably included. It is to be understood that any of these elements, parts and steps may be replaced by other elements, parts and steps or deleted altogether as will be obvious to those skilled in the art.

**Claims**

1. A device (100) for filtering human interface device inputs based on motion, said device comprising:

a motion event generator (102) configured for generating at least one motion event (104) based on information associated with a movement of a patient care device (108) and at least one motion detecting filter (110); and the device (100) being **characterized in that** it comprises:

an input filter applicator (112), said input filter applicator (112) configured for applying a set of input filters (114) to said at least one motion event (104) and to an input from the human interface device, thereby determining a status (118) indicating whether the input is rejected (146) or passed through to an output port for access from an external system (126), and generating a filtered output event (116) that indicates a status of said movement of said patient care device (108) and the status (118) of the input from the human interface device; and a filtered output motion event transmitter (142) configured for sending, to aft the external system (126), the filtered output event (116) that indicates the status of the movement of the patient care device (108) and the status (118) of the input from the human interface device;

wherein said input from the human interface device is an input from one of a keyboard, a touch screen, a knob device, a trackball, a mouse, a touch pad, a joystick, special keys on an alpha-numeric input device, and wherein the status of the input is determined to be rejected based on the input occurring within a configurable time frame of the at least one motion event.

2. The device of claim 1, further comprising:
an accelerometer coupled with said motion event generator and said patient care device (108), said accelerometer configured for providing said information associated with said movement of said patient care device (108).

3. The device of claim 1, wherein the at least one motion detecting filter (110) is configured to detect motion using a value indicative of a persistency of a derivate of a motion acceleration over a period of time.

4. The device of claim 1, wherein said at least one motion detecting filter (110) detects orientation.

5. The device of claim 1, further comprising:
a data store (136) configured for storing configuration parameters (138) for at least one of said at least one motion detecting filter (110) and said set of input filters (114).

6. The device of claim 5, wherein said configuration parameters (138) are modifiable at the external-system.

7. The device of claim 6, wherein said configuration parameters (138) are grouped into active configuration profiles (140) that define behavior of operations of said device.

8. The device of claim 1, wherein the at least one motion detecting filter (110) is configured to detect motion using a value indicative of a sum of motion accelerations.

9. The device of claim 8, wherein said filtered output event (116) is configured to be used to determine preventative maintenance needs.

10. The device of claim 8, wherein said filtered output event (116) is configured to be used to alert medical personnel when said patient care device is dropped.

11. The device of claim 1, wherein said status (118) comprises at least one of accepted (144), rejected (146), and modified (148).

12. The device of claim 11, further comprising:
a status transmitter (150) configured for sending said status (118) of a component of said patient care device (108) to the external system.

13. The device of claim 1, wherein an input of said set of input filters (114) is timer input.

14. A system for filtering human interface device inputs based on motion, said system comprising:

a patient care device (108); and
a motion filtering human interface device (100) coupled with said patient care device (108), said motion filtering human interface device (100) comprising:

a motion event generator (102) configured for generating at least one motion event (104) based on information associated with a movement of said patient care device (108) and at least one motion detecting filter (110);
the system being **characterized in that** the motion filtering human interface device comprises:

an input filter applicator (112), said input filter applicator (112) configured for applying a set of input filters (114) to said at least one motion event (104) and to an input from the human interface device, thereby determining a status (118) indicating whether the input is rejected (146) or passed through to an output port for access from an external system (126), and generating a filtered output event (116) that indicates a status of said movement of said patient care device (108) and the status of the input from the human interface device; and
a filtered output motion event transmitter configured for sending, to the external system (126), the filtered output event (116) that indicates the status of the movement of the patient care device (108) and the status (118) of the input from the human interface device;

wherein said input from the human interface device is an input from one of a keyboard, a touch screen, a knob device, a trackball, a mouse, a touch pad, a joystick, special keys on an alpha-numeric input device, and wherein the status of the input is determined to be rejected based on the input occurring within a time frame of the at least one motion event.

15. A method for filtering human interface device inputs based on motion, said method comprising:

determining (202) information associated with a movement of a patient care device to achieve an information determination, said determining performed at a motion sensor;
generating (204) at least one motion event based on said information determination and at least one motion detecting filter, said generating performed at a computer coupled with said motion sensor;
the method being **characterized in that** it comprises:

applying (206) a set of input filters to said at least one motion event and to an input from the human interface device, thereby determining a status (118) indicating whether the input is rejected (146) or passed through to an output port for access from an external system (126), and generating a filtered output event indicating a status of said movement of said patient care device and the status of the input from the human interface device, said applying performed at said computer;

sending to the external system (126) the filtered output event that indicates the status of the movement of the patient care device and the status of the input from the human interface device;

wherein said input from the human interface device is an input from one of a keyboard, a touch screen, a knob device, a trackball, a mouse, a touch pad, a joystick, special keys on an alpha-numeric input device, and wherein the status of the input is determined to be rejected based on the input occurring within a time frame of the at least one motion event.

**Patentansprüche**

1. Vorrichtung (100) zum Filtern von Eingaben über eine Menschen-Schnittstellenvorrichtung auf der Basis von Bewegung, wobei die Vorrichtung folgendes umfasst:

   einen Bewegungsereignisgenerator (102), der so gestaltet ist, dass er mindestens ein Bewegungsereignis (104) auf der Basis von Informationen erzeugt, die einer Bewegung einer Patientenpflegevorrichtung (108) und mindestens einem Bewegungserkennungsfilter (110) zugeordnet sind; und
   wobei die Vorrichtung (100) **dadurch gekennzeichnet ist, dass** sie folgendes umfasst:

   einen Eingabefilterapplikator (112), wobei der Eingabefilterapplikator (112) so gestaltet ist, dass er eine Gruppe von Eingabefiltern (114) auf das mindestens eine Bewegungsereignis (104) anwendet und auf eine Eingabe von der Menschen-Schnittstellenvorrichtung, wodurch ein Status (118) bestimmt wird, der anzeigt, ob die Eingabe abgelehnt (146) oder zu einem Ausgangsanschluss für einen Zugriff von einem externen System (126) durchgeleitet wird, und wobei ein gefiltertes Ausgabeereignis (116) erzeugt wird, das einen Status der Bewegung der Patientenpflegevorrichtung (108) und den Status (118) der Eingabe von der Mensch-Schnittstellenvorrichtung anzeigt; und
   einen Sender (142) für ein gefiltertes Ausgabebewegungsereignis, wobei der Filter so gestaltet ist, dass er das gefilterte Ausgabeereignis (116) an das externe System (126) sendet, wobei das gefilterte Ausgabeereignis den Status der Bewegung der Patientenpflegevorrichtung (108) und den Status (118) der Eingabe von der Mensch-Schnittstellenvorrichtung anzeigt;

   wobei die Eingabe von der Mensch-Schnittstellenvorrichtung eine Eingabe von einem der folgenden ist: einer Tastatur, einem Touchscreen, einer Vorrichtung mit Kopf, eines Trackballs, einer Maus, eines Touchpads, eines Joysticks, von Sondertasten auf einer alphanumerischen Eingabevorrichtung, und wobei bestimmt wird, dass der Status der Eingabe abgelehnt wird, auf der Basis der Eingabe, die in einem konfigurierbaren Zeitrahmen des mindestens einen Bewegungsereignisses eintritt.

2. Vorrichtung nach Anspruch 1, wobei diese ferner folgendes umfasst:
   einen Beschleunigungsmesser, der mit dem Bewegungsereignisgenerator und der Patientenpflegevorrichtung (108) gekoppelt ist, wobei der Beschleunigungsmesser so gestaltet ist, dass er die der Bewegung der Patientenpflegevorrichtung (108) zugeordneten Informationen bereitstellt.

3. Vorrichtung nach Anspruch 1, wobei der mindestens eine Bewegungserkennungsfilter (110) so gestaltet ist, dass er Bewegung unter Verwendung eines Wertes erkennt, der ein Fortbestehen eines Derivats einer Bewegungsbeschleunigung über einen Zeitraum anzeigt.

4. Vorrichtung nach Anspruch 1, wobei der mindestens eine Bewegungserkennungsfilter (110) die Ausrichtung erkennt.

5. Vorrichtung nach Anspruch 1, wobei diese ferner folgendes umfasst:
   einen Datenspeicher (136), der so gestaltet ist, dass er Konfigurationsparameter (138) für mindestens den mindestens einen Bewegungserkennungsfilter (110) und/oder die Gruppe von Eingabefiltern (114) speichert.

6. Vorrichtung nach Anspruch 5, wobei die Konfigurationsparameter (138) an dem externen System modifiziert werden können.

**7.** Vorrichtung nach Anspruch 6, wobei die Konfigurationsparameter (138) in aktive Konfigurationsprofile (140) eingeteilt sind, die das Verhalten von Operationen der Vorrichtung definieren.

**8.** Vorrichtung nach Anspruch 1, wobei der mindestens eine Bewegungserkennungsfilter (110) so gestaltet ist, dass er Bewegung unter Verwendung eines Wertes erkennt, der eine Summe von Bewegungsbeschleunigungen anzeigt.

**9.** Vorrichtung nach Anspruch 8, wobei das gefilterte Ausgabeereignis (116) so gestaltet ist, dass es zur Bestimmung präventiver Wartungsanforderungen verwendet werden kann.

**10.** Vorrichtung nach Anspruch 8, wobei das gefilterte Ausgabeereignis (116) so gestaltet ist, dass es dazu verwendet werden kann, medizinisches Personal darauf hinzuweisen, wenn die Patientenpflegevorrichtung fallengelassen wird.

**11.** Vorrichtung nach Anspruch 1, wobei der Status (118) mindestens einen der folgenden umfasst: angenommen (144), abgelehnt (146) und modifiziert (148).

**12.** Vorrichtung nach Anspruch 11, wobei diese ferner folgendes umfasst:
einen Statussender (150), der so gestaltet ist, dass er den Status (118) einer Komponente der Patientenpflegevorrichtung (108) an das externe System sendet.

**13.** Vorrichtung nach Anspruch 1, wobei eine Eingabe der Gruppe von Eingabefiltern (114) eine Timer-Eingabe ist.

**14.** System zum Filtern von Eingaben über eine Menschen-Schnittstellenvorrichtung auf der Basis von Bewegung, wobei das System folgendes umfasst:

eine Patientenpflegevorrichtung (108); und
eine Bewegungsfilter-Mensch-Schnittstellenvorrichtung (100), die mit der Patientenpflegevorrichtung (108) gekoppelt ist, wobei die Bewegungsfilter-Mensch-Schnittstellenvorrichtung (100) folgendes umfasst:

einen Bewegungsereignisgenerator (102), der der so gestaltet ist, dass er mindestens ein Bewegungsereignis (104) auf der Basis von Informationen erzeugt, die einer Bewegung einer Patientenpflegevorrichtung (108) und mindestens einem Bewegungserkennungsfilter (110) zugeordnet sind;
wobei das System **dadurch gekennzeichnet ist, dass** die Bewegungsfilter-Mensch-Schnittstellenvorrichtung folgendes umfasst:

einen Eingabefilterapplikator (112), wobei der Eingabefilterapplikator (112) so gestaltet ist, dass er eine Gruppe von Eingabefiltern (114) auf das mindestens eine Bewegungsereignis (104) anwendet und auf eine Eingabe von der Menschen-Schnittstellenvorrichtung, wodurch ein Status (118) bestimmt wird, der anzeigt, ob die Eingabe abgelehnt (146) oder zu einem Ausgangsanschluss für einen Zugriff von einem externen System (126) durchgeleitet wird, und wobei ein gefiltertes Ausgabeereignis (116) erzeugt wird, das einen Status der Bewegung der Patientenpflegevorrichtung (108) und den Status der Eingabe von der Mensch-Schnittstellenvorrichtung anzeigt; und
einen Sender für ein gefiltertes Ausgabebewegungsereignis, wobei der Filter so gestaltet ist, dass er das gefilterte Ausgabeereignis (116) an das externe System (126) sendet, wobei das gefilterte Ausgabeereignis den Status der Bewegung der Patientenpflegevorrichtung (108) und den Status (118) der Eingabe von der Mensch-Schnittstellenvorrichtung anzeigt;

wobei die Eingabe von der Mensch-Schnittstellenvorrichtung eine Eingabe von einem der folgenden ist: einer Tastatur, einem Touchscreen, einer Vorrichtung mit Kopf, eines Trackballs, einer Maus, eines Touchpads, eines Joysticks, von Sondertasten auf einer alphanumerischen Eingabevorrichtung, und wobei bestimmt wird, dass der Status der Eingabe abgelehnt wird, auf der Basis der Eingabe, die in einem konfigurierbaren Zeitrahmen des mindestens einen Bewegungsereignisses eintritt.

**15.** Verfahren Filtern von Eingaben über eine Menschen-Schnittstellenvorrichtung auf der Basis von Bewegung, wobei das Verfahren folgendes umfasst:

Bestimmen (202) von Informationen, die einer Bewegung einer Patientenpflegevorrichtung zugeordnet sind, um eine Informationsbestimmung zu erreichen, wobei das Bestimmen an einem Bewegungssensor ausgeführt wird;

Erzeugen (204) mindestens eines Bewegungsereignisses auf der Basis der Informationsbestimmung und mindestens eines Bewegungserkennungsfilters, wobei das Erzeugen an einem Computer ausgeführt wird, der mit dem Bewegungssensor gekoppelt ist;
wobei das Verfahren **dadurch gekennzeichnet ist, dass** es folgendes umfasst:

Anwenden (206) einer Gruppe von Eingabefiltern auf das mindestens eine Bewegungsereignis und auf eine Eingabe von der Menschen-Schnittstellenvorrichtung, wodurch ein Status (118) bestimmt wird, der anzeigt, ob die Eingabe abgelehnt (146) oder zu einem Ausgangsanschluss für einen Zugriff von einem externen System (126) durchgeleitet wird, und Erzeugen eines gefilterten Ausgabeereignisses, das einen Status der Bewegung der Patientenpflegevorrichtung und den Status der Eingabe von der Mensch-Schnittstellenvorrichtung anzeigt, wobei das Anwenden an dem Computer ausgeführt wird; und
Senden des gefilterten Ausgabebewegungsereignisses an ein externes System (126), wobei das gefilterte Ausgabeereignis den Status der Bewegung der Patientenpflegevorrichtung und den Status der Eingabe von der Mensch-Schnittstellenvorrichtung anzeigt;
wobei die Eingabe von der Mensch-Schnittstellenvorrichtung eine Eingabe von einem der folgenden ist: einer Tastatur, einem Touchscreen, einer Vorrichtung mit Kopf, eines Trackballs, einer Maus, eines Touchpads, eines Joysticks, von Sondertasten auf einer alphanumerischen Eingabevorrichtung, und wobei bestimmt wird, dass der Status der Eingabe abgelehnt wird, auf der Basis der Eingabe, die in einem konfigurierbaren Zeitrahmen des mindestens einen Bewegungsereignisses eintritt.

## Revendications

1. Dispositif (100) pour filtrer des entrées de dispositif d'interface humaine basé sur le mouvement, ledit dispositif comprenant :

un générateur d'événement de mouvement (102) conçu pour générer au moins un événement de mouvement (104) basé sur des informations associées à un mouvement d'un dispositif de soins aux patients (108) et au moins un filtre de détection de mouvement (110) ; et
le dispositif (100) étant **caractérisé en ce qu'**il comprend :

un applicateur de filtre d'entrée (112), ledit applicateur de filtre d'entrée (112) étant conçu pour appliquer un ensemble de filtres d'entrée (114) audit au moins un événement de mouvement (104) et à une entrée provenant du dispositif d'interface humaine, déterminant ainsi un statut (118) indiquant si l'entrée est rejetée (146) ou transmise à un port de sortie pour un accès à partir d'un système externe (126), et générant un événement de sortie filtré (116) qui indique un statut dudit mouvement dudit dispositif de soins au patient (108) et le statut (118) de l'entrée provenant du dispositif d'interface humaine ; et
un émetteur d'événement de mouvement de sortie filtré (142) conçu pour envoyer, à un système externe (126), l'événement de sortie filtré (116) qui indique le statut du mouvement du dispositif de soins au patient (108) et le statut (118) de l'entrée provenant du dispositif d'interface humaine ;

ladite entrée provenant du dispositif d'interface humaine étant une entrée provenant d'un clavier, d'un écran tactile, d'un dispositif à boutons, d'une boule de commande, d'une souris, d'un pavé tactile, d'un joystick, de touches spéciales sur un dispositif d'entrée alphanumérique, et le statut de l'entrée étant déterminé comme étant rejeté sur la base de l'entrée se produisant dans un délai configurable de l'au moins un événement de mouvement.

2. Dispositif selon la revendication 1, comprenant en outre :
un accéléromètre couplé audit générateur d'événement de mouvement et audit dispositif de soins aux patients (108), ledit accéléromètre étant conçu pour fournir lesdites informations associées audit mouvement dudit dispositif de soins aux patients (108).

3. Dispositif selon la revendication 1, l'au moins un filtre de détection de mouvement (110) étant conçu pour détecter un mouvement en utilisant une valeur indiquant une persistance d'un dérivé d'une accélération de mouvement sur une période de temps.

4. Dispositif selon la revendication 1, ledit au moins un filtre de détection de mouvement (110) détectant l'orientation.

**5.** Dispositif selon la revendication 1, comprenant en outre :
une mémoire de données (136) conçue pour stocker des paramètres de configuration (138) pour au moins l'un dudit au moins un filtre de détection de mouvement (110) et dudit ensemble de filtres d'entrée (114).

**6.** Dispositif selon la revendication 5, lesdits paramètres de configuration (138) étant modifiables au niveau du système externe.

**7.** Dispositif selon la revendication 6, lesdits paramètres de configuration (138) étant regroupés en profils de configuration actifs (140) qui définissent le comportement des opérations dudit dispositif.

**8.** Dispositif selon la revendication 1, l'au moins un filtre de détection de mouvement (110) étant conçu pour détecter le mouvement à l'aide d'une valeur indiquant une somme d'accélérations de mouvement.

**9.** Dispositif selon la revendication 8, ledit événement de sortie filtré (116) étant conçu pour être utilisé pour déterminer les besoins de maintenance préventive.

**10.** Dispositif selon la revendication 8, ledit événement de sortie filtré (116) étant conçu pour être utilisé pour alerter le personnel médical lorsque ledit dispositif de soins aux patients est abandonné.

**11.** Dispositif selon la revendication 1, ledit statut (118) comprenant accepté (144), rejeté (146) et/ou modifié (148).

**12.** Dispositif selon la revendication 11, comprenant en outre :
un émetteur de statut (150) conçu pour envoyer ledit statut (118) d'un composant dudit dispositif de soins aux patients (108) au système externe.

**13.** Dispositif selon la revendication 1, une entrée dudit ensemble de filtres d'entrée (114) étant une entrée de temporisateur.

**14.** Système pour filtrer des entrées de dispositif d'interface humaine basé sur le mouvement, ledit système comprenant :

un dispositif de soins aux patients (108) ; et
un dispositif d'interface humaine de filtrage de mouvement (100) couplé audit dispositif de soins aux patients (108), ledit dispositif d'interface humaine de filtrage de mouvement (100) comprenant :

un générateur d'événement de mouvement (102) conçu pour générer au moins un événement de mouvement (104) basé sur des informations associées à un mouvement dudit dispositif de soins aux patients (108) et au moins un filtre de détection de mouvement (110) ;
le système étant **caractérisé en ce que** le dispositif d'interface humaine de filtrage de mouvement comprend :

un applicateur de filtre d'entrée (112), ledit applicateur de filtre d'entrée (112) étant conçu pour appliquer un ensemble de filtres d'entrée (114) audit au moins un événement de mouvement (104) et à une entrée provenant du dispositif d'interface humaine, déterminant ainsi un statut (118) indiquant si l'entrée est rejetée (146) ou transmise à un port de sortie pour un accès à partir d'un système externe (126), et générant un événement de sortie filtré (116) qui indique un statut dudit mouvement dudit dispositif de soins au patient (108) et le statut de l'entrée provenant du dispositif d'interface humaine ; et
un émetteur d'événement de mouvement de sortie filtré conçu pour envoyer, à un système externe (126), l'événement de sortie filtré (116) qui indique le statut du mouvement du dispositif de soins au patient (108) et le statut (118) de l'entrée du dispositif d'interface humaine ;
ladite entrée provenant du dispositif d'interface humaine étant une entrée provenant d'un clavier, d'un écran tactile, d'un dispositif à boutons, d'une boule de commande, d'une souris, d'un pavé tactile, d'un joystick, de touches spéciales sur un dispositif d'entrée alphanumérique, et le statut de l'entrée étant déterminé comme étant rejeté sur la base de l'entrée se produisant dans un délai de l'au moins un événement de mouvement.

**15.** Procédé pour filtrer des entrées de dispositif d'interface humaine basé sur le mouvement, ledit procédé comprenant les étapes consistant à :

déterminer (202) des informations associées à un mouvement d'un dispositif de soins aux patients pour obtenir une détermination d'informations, ladite détermination étant effectuée au niveau d'un capteur de mouvement ;

générer (204) au moins un événement de mouvement basé sur ladite détermination d'informations et au moins un filtre de détection de mouvement, ladite génération étant effectuée au niveau d'un ordinateur couplé audit capteur de mouvement ;

le procédé étant **caractérisé en ce qu'**il comprend les étapes consistant à :

appliquer (206) un ensemble de filtres d'entrée audit au moins un événement de mouvement et à une entrée provenant du dispositif d'interface humaine, déterminant ainsi un statut (118) indiquant si l'entrée est rejetée (146) ou transmise à un port de sortie pour un accès à partir d'un système externe (126), et générer un événement de sortie filtré indiquant un statut dudit mouvement dudit dispositif de soins au patient et le statut de l'entrée provenant du dispositif d'interface humaine, ladite application étant effectuée au niveau dudit ordinateur ;

envoyer au système externe (126) l'événement de sortie filtré qui indique le statut du mouvement du dispositif de soins au patient et le statut de l'entrée provenant du dispositif d'interface humaine ;

ladite entrée provenant du dispositif d'interface humaine étant une entrée provenant d'un clavier, d'un écran tactile, d'un dispositif à boutons, d'une boule de commande, d'une souris, d'un pavé tactile, d'un joystick, de touches spéciales sur un dispositif d'entrée alphanumérique, et le statut de l'entrée étant déterminé comme étant rejeté sur la base de l'entrée se produisant dans un délai de l'au moins un événement de mouvement.

Patient care device
108

Device 100

Motion Event
Generator 102

At least one
motion
detecting filter
110

Bumps
128

Shake
130

Motion
132

Orientation
134

Input filter
applicator
112

Set of
Input
filters
114

Input
152

Timer
Input
154

Raw
Input
155

Filter Output
Event
Transmitter
142

Status
Transmitter
150

Filtered Output
Event 116

Status 118

Accepted
144

Rejected
146

Modified
148

Motion Sensor
107

Information
105

Acceleration
readings
106

Static
acceleration
forces
122

Dynamic
acceleration
forces
124

At least one motion
event
104

External System
126

Data Store
136

Configuration
Parameters
138

Active
Configuration
Profiles
140

# FIG. 1

**200**

```
┌─────────────┐
│   START     │
└─────────────┘
       │
       ▼
┌──────────────────────────────────────────────────────────────────┐
│ DETERMINES INFORMATION ASSOCIATED WITH A MOVEMENT OF A PATIENT     │
│ CARE DEVICE TO ACHIEVE AN INFORMATION DETERMINATION, THE           │
│ DETERMINING PERFORMED AT A MOTION SENSOR.                          │
│                            202                                     │
└──────────────────────────────────────────────────────────────────┘
       │
       ▼
┌──────────────────────────────────────────────────────────────────┐
│ GENERATES AT LEAST ONE MOTION EVENT BASED ON THE INFORMATION       │
│ DETERMINATION AND AT LEAST ONE MOTION DETECTING FILTER, THE        │
│ GENERATING PERFORMED AT A COMPUTER COUPLED WITH THE MOTION         │
│ SENSOR.                                                            │
│                            204                                     │
└──────────────────────────────────────────────────────────────────┘
       │
       ▼
┌──────────────────────────────────────────────────────────────────┐
│ APPLIES A SET OF INPUT FILTERS TO THE AT LEAST ONE MOTION EVENT,   │
│ THEREBY GENERATING A FILTERED OUTPUT EVENT INDICATING A STATUS     │
│ OF THE MOVEMENT OF THE PATIENT CARE DEVICE, THE APPLYING           │
│ PERFORMED AT THE COMPUTER                                          │
│                            206                                     │
└──────────────────────────────────────────────────────────────────┘
       │
       ▼
┌─────────────┐
│    END      │
└─────────────┘
```

# FIG. 2

**300**

```
┌─────────────────────┐
│  OPERATING SYSTEM   │
│        322          │
└─────────────────────┘

┌─────────────────────┐
│    APPLICATIONS     │
│        324          │
└─────────────────────┘

┌─────────────────────┐
│      MODULES        │
│        326          │
└─────────────────────┘

┌─────────────────────┐
│       DATA          │
│        328          │
└─────────────────────┘
```

```
┌─────────────────────┐
│     PERIPHERAL      │
│     COMPUTER        │
│     READABLE        │
│       MEDIA         │
│        302          │
└─────────────────────┘
```

```
                306C
              306B
            306A

┌──────────────┐  ┌──────────────┐  ┌──────────────┐  ┌──────────────┐
│  PROCESSOR   │  │  COMPUTER    │  │  COMPUTER    │  │ DATA STORAGE │
│              │  │ USABLE MEMORY│  │USABLE VOLATILE│ │    UNIT      │
│              │  │   (ROM)      │  │ MEMORY (RAM) │  │    312       │
│              │  │   310        │  │    308       │  │              │
└──────────────┘  └──────────────┘  └──────────────┘  └──────────────┘

┌────────────────────────────────────────────────────────────────────┐
│                          BUS  304                                   │
└────────────────────────────────────────────────────────────────────┘
```

```
┌──────────────┐  ┌──────────────┐  ┌──────────────┐  ┌──────────────┐
│DISPLAY DEVICE│  │ALPHA-NUMERIC │  │   CURSOR     │  │  I/O DEVICE  │
│    318       │  │   INPUT      │  │  CONTROL     │  │    320       │
│              │  │   314        │  │    316       │  │              │
└──────────────┘  └──────────────┘  └──────────────┘  └──────────────┘
```

# FIG. 3